# EUROPÄISCHE PATENTSCHRIFT

(11) **EP 2 452 237 B1**
(45) Veröffentlichungstag und Bekanntmachung des Hinweises auf die Patenterteilung: **31.10.2018**
(21) Anmeldenummer: 10729912.5
(22) Anmeldetag: 09.07.2010
(51) Int. Cl.: G05B 19/05, B61L 27/00

(54) **VORRICHTUNG UND VERFAHREN ZUM STEUERN EINER AUTOMATISIERTEN ANLAGE, INSBESONDERE EINE EISENBAHNANLAGE**
DEVICE AND METHOD FOR CONTROLLING AN AUTOMATED SYSTEM, IN PARTICULAR A RAILWAY SYSTEM
DISPOSITIF ET PROCÉDÉ POUR COMMANDER UNE INSTALLATION AUTOMATISÉE, EN PARTICULIER UNE INSTALLATION FERROVIAIRE

(30) Priorität: 10.07.2009 DE 102009033529
(43) Veröffentlichungstag der Anmeldung: 16.05.2012
(73) Patentinhaber: Pilz GmbH & Co. KG, 73760 Ostfildern (DE)
(72) Erfinder: SCHWENKEL, Hans, 70192 Stuttgart (DE); WEISHAAR, Christoph, 71336 Waiblingen-Bittenfeld (DE)
(74) Vertreter: Witte, Weller & Partner Patentanwälte mbB
(86) Internationale Anmeldenummer: PCT/EP2010/059862
(87) Internationale Veröffentlichungsnummer: WO 2011/003998

(56) Entgegenhaltungen:
- WO-A1-2006/011578
- US-A- 5 119 739

## Beschreibung

Die vorliegende Erfindung betrifft eine Vorrichtung zum Steuern einer automatisierten Anlage, insbesondere eine Eisenbahnanlage, die Sensoren und Aktoren aufweist, mit einer programmierbaren Steuereinheit zum Ausführen eines Anwenderprogramms, mit einer lokalen E/A-Einheit, an die eine Anzahl der Sensoren und Aktoren angeschlossen sind, mit einer lokalen Abschalteinheit, die mit der lokalen E/A-Einheit gekoppelt ist, und mit einem Kommunikationsnetzwerk, das die Steuereinheit und die lokale E/A-Einheit verbindet, wobei die Steuereinheit dazu ausgebildet ist, Eingangsdaten von den Sensoren in Abhängigkeit von dem Anwenderprogramm zu verarbeiten, um Steuerbefehle für die Aktoren zu erzeugen, wobei die Steuereinheit und die E/A-Einheit dazu ausgebildet sind, Datentelegramme über das Kommunikationsnetzwerk auszutauschen, um die Eingangsdaten und die Steuerbefehl zu übertragen, wobei die Steuereinheit dazu ausgebildet ist, Verifikationsdaten in die Datentelegramme für die E/A-Einheit zu integrieren, und wobei die Abschalteinheit dazu ausgebildet ist, die E/A-Einheit in Abhängigkeit von den Verifikationsdaten zu deaktivieren.

Die Erfindung betrifft ferner ein Verfahren zum Steuern einer automatisierten Anlage, insbesondere einer Eisenbahnanlage, die Sensoren und Aktoren aufweist, mit den Schritten:
- Bereitstellen einer lokalen E/A-Einheit, an die eine Anzahl der Sensoren und Aktoren angeschlossen werden,
- Bereitstellen einer lokalen Abschalteinheit im Bereich der E/A-Einheit und Koppeln der lokalen Abschalteinheit mit der lokalen E/A-Einheit,
- Bereitstellen einer Steuereinheit zum Verarbeiten von Eingangsdaten der Sensoren und zum Erzeugen von Steuerbefehlen für die Aktoren,
- Austauschen von Datentelegrammen zwischen der Steuereinheit und der E/A-Einheit über ein Kommunikationsnetzwerk, das die Steuereinheit und die lokale E/A-Einheit verbindet,
wobei die Steuereinheit die Aktoren in Abhängigkeit von den Eingangsdaten der Sensoren mit Hilfe der Datentelegramme ansteuert, wobei die Steuereinheit Verifikationsdaten in die Datentelegramme für die E/A-Einheit integriert und wobei die Abschalteinheit die E/A-Einheit in Abhängigkeit von den Verifikationsdaten deaktiviert.

Eine ähnliche Vorrichtung und ein ähnliches Verfahren sind - allerdings nicht für eine Eisenbahnanlage - aus WO 2006/011578 A1 bekannt.
Dieses Dokument offenbart eine Sicherheitssteuerung mit einem sogenannten Master und mehreren Slaves, die über ein Kommunikationsnetzwerk in Form eines ringförmigen Busses miteinander verbunden sind. Sowohl der Master als auch die Slaves besitzen eine als MPU bezeichnete Verarbeitungseinheit, die ein Programm ausführen kann, sowie ein Eingangs-/Ausgangs-Modul zum Anschluss von Sensoren und Aktoren und eine Schnittstelle für den Anschluss an das Kommunikationsnetzwerk. In die Datentelegramme, die zwischen dem Master und den Slaves übertragen werden, wird ein sogenannter Testbitstring eingebettet, der es möglich macht, die Anzahl von Bitfehlern in einem fehlerhaft übertragenen Datentelegramm zu bestimmen.

DE 10 2007 039 154 A1 beschreibt ein sogenanntes Sicherungssystem für ein Eisenbahnnetz mit einer Steuerungsebene und mit anzusteuernden Feldelementen. Als Beispiel wird ein elektronisches Stellwerk genannt. Solche Stellwerke seien historisch stark zentralisiert aufgebaut und eine kleine Änderung ziehe sich daher durch das gesamte System. Dies gelte auch für die Software, die bei kleinen Änderungen von der Steuerungsebene bis zu den Feldelementen, wie etwa Weichen, Fahrsignalen etc., angepasst werden muss. Um das Umbauen und Erweitern eines solchen Sicherungssystems zu erleichtern, schlägt die Druckschrift einen modularen Aufbau vor, wobei die Steuerungsebene als Master ausgebildet ist, wobei die Feldelemente als Slaves ausgebildet sind, und wobei der Master und die Slaves über ein Kommunikationssystem miteinander verbunden sind. Die Slaves sollen außerdem über einen Controller ansteuerbar sein, der über eine für alle Slaves einheitliche Kommunikationsschnittstelle an das Kommunikationssystem anschließbar ist.

DE 10 2007 039 154 A1 setzt für die vorgeschlagene Realisierung voraus, dass das Kommunikationssystem eine unverfälschte und unverfälschbare Übermittlung von Datentelegrammen zwischen dem Master und den Slaves gewährleistet. Mit anderen Worten erfordert die vorgeschlagene Lösung ein fehlersicheres Kommunikationssystem zwischen dem Master und den Slaves. Dies hat zur Folge, dass sowohl der Master als auch die Slaves eine spezielle Kommunikationsschnittstelle für ein fehlersicheres Kommunikationssystem besitzen müssen. Eine solche Realisierung mag gegenüber früheren Sicherungssystemen, von denen DE 10 2007 039 154 A1 ausgeht, einen Fortschritt in Bezug auf die Flexibilität bei Umbauten oder Erweiterungen bringen. Die vorgeschlagene Realisierung ist jedoch nachteilig, wenn man bestehende Eisenbahnanlagen umrüsten möchte, da sie auf der Verwendung eines speziellen und damit in der Regel proprietären Kommunikationssystems basiert.

In DE 197 42 716 A1 ist eine Steuer- und Datenübertragungsanlage mit einer Steuereinheit und mehreren E/A-Einheiten beschrieben. In der Steuereinheit und den E/A-Einheiten sind jeweils sicherheitsbezogene Baugruppen integriert, die zu übertragende Eingans- und Ausgangsdaten negieren und redundant zu den Originaldaten übertragen. Die redundante Datenübertragung erfordert eine speziell darauf ausgebildete und somit proprietäre Kommunikationsschnittstelle und entsprechend ausgebildete E/A-Einheiten. Daher ist auch diese Steuer- und Datenübertragungsanlage nachteilig, wenn man bestehende Eisenbahnanlagen umrüsten möchte.

Vor diesem Hintergrund ist es eine Aufgabe der vorliegenden Erfindung, eine Vorrichtung und ein Verfahren der eingangs genannten Art anzugeben, die eine flexible Änderung oder Erweiterung einer automatisierten Anlage mit sicherheitsrelevanten Komponenten, insbesondere einer Eisenbahnanlage, auf kostengünstige Weise ermöglichen.

Gemäß einem Aspekt der vorliegenden Erfindung wird diese Aufgabe durch eine Vorrichtung und ein Verfahren der eingangs genannten Art gelöst, wobei die lokale Abschalteinheit in die Verarbeitung und Übertragung der Eingangsdaten und Steuerbefehle nicht eingebunden ist, so dass die Funktion von Abschalteinheit und E/A-Einheit getrennt und unabhängig voneinander sind.

Gemäß einem weiteren Aspekt wird eine Abschalteinheit zur Verwendung in einer Vorrichtung der eingangs genannten Art bereitgestellt, mit einer Datenschnittstelle zum Anschluss an eine lokale E/A-Einheit, mit einem Datenverarbeitungsteil zum Verarbeiten von Verifikationsdaten, die die Steuereinheit in die Datentelegramme für die E/A-Einheit integriert und die abseits der Eingangsdaten und Steuerbefehle über die Datenschnittstelle zuführbar sind, und mit einem Abschaltteil, der dazu ausgebildet ist, die E/A-Einheit in Abhängigkeit von den speziellen Verifikationsdaten zu deaktivieren, wobei die Abschalteinheit in die Verarbeitung und Übertragung der Eingangsdaten und Steuerbefehle nicht eingebunden ist, so dass die Funktion von Abschalteinheit und E/A-Einheit getrennt und unabhängig voneinander sind.

Die neue Vorrichtung und das neue Verfahren verwenden eine zusätzliche, lokale Abschalteinheit, die mit der lokalen E/A-Einheit gekoppelt ist. Die Abschalteinheit ist jedoch nicht in die Verarbeitung und Übertragung der Eingangsdaten und Steuerbefehle eingebunden. Vorteilhaft ist die Abschalteinheit im Bereich der E/A-Einheit positioniert. Die Abschalteinheit erhält über ein an die E/A-Einheit adressiertes Datentelegramm die speziellen Verifikationsdaten, die von der (vorzugsweise zentralen) Steuereinheit in die Datentelegramme eingebettet werden. Damit kann die Abschalteinheit anhand der Verifikationsdaten überprüfen, ob die gekoppelte E/A-Einheit ein Datentelegramm erhalten hat, das die Steuereinheit tatsächlich an die gekoppelte E/A-Einheit gerichtet hatte.

In bevorzugten Ausführungsbeispielen ist die lokale Abschalteinheit mit dem Kommunikationsnetzwerk nicht unmittelbar verbunden, d.h. die lokale Abschalteinheit besitzt keine eigene Schnittstelle zum Anschluss an das Kommunikationsnetzwerk. Die lokale Abschalteinheit erhält die Verifikationsdaten in diesem Fall ausschließlich über die lokale E/A-Einheit. Prinzipiell ist es jedoch denkbar, die lokale Abschalteinheit zusätzlich auch mit einer Kommunikationsschnittstelle für einen direkten Anschluss an das Kommunikationsnetzwerk zu versehen, um eine direkte Kommunikation zwischen der Steuereinheit und der lokalen Abschalteinheit zu ermöglichen, beispielsweise für eine Fernwartung der lokalen Abschalteinheit von einem beliebigen Zugangspunkt zu dem Kommunikationsnetzwerk.

Unabhängig von einem solchen, optional zusätzlichen Anschluss der Abschalteinheit an das Kommunikationsnetzwerk ist die Abschalteinheit jedoch vor allem dazu ausgebildet, Verifikationsdaten zu verarbeiten, die in die Datentelegramme integriert sind, die an die E/A-Einheit gesendet werden. Die Abschalteinheit erhält diese Verifikationsdaten nur, wenn das entsprechende Datentelegramm die gekoppelte E/A-Einheit tatsächlich auch erreicht hat. Infolgedessen kann die Abschalteinheit überwachen, ob die gekoppelte E/A-Einheit ein an sie adressiertes Datentelegramm erhalten hat. Nur wenn die Abschalteinheit korrekte Verifikationsdaten erhält, gibt sie den Betrieb der E/A-Einheit frei. Fehlen die Verifikationsdaten oder stimmen die Verifikationsdaten nicht mit einer Erwartungshaltung in der Abschalteinheit überein, deaktiviert die Abschalteinheit die gekoppelte E/A-Einheit. Die Abschalteinheit verhindert also in Abhängigkeit von den Verifikationsdaten den Zugriff der Steuereinheit auf die lokale E/A-Einheit.

Die Verifikationsdaten sind unabhängig von den Eingangsdaten und Steuerbefehlen und speziell für die Abschalteinheit bestimmt. Die E/A-Einheit benötigt die Verifikationsdaten nicht, um einen Steuerbefehl zu interpretieren. Dementsprechend werden die Verifikationsdaten in den bevorzugten Ausführungsbeispielen von der E/A-Einheit nicht ausgewertet. Vielmehr leitet die E/A-Einheit die Verifikationsdaten in den bevorzugten Ausführungsbeispielen "ungelesen", d.h. ohne eine Interpretation der Daten, an die Abschalteinheit weiter. Umgekehrt erfolgt die Verarbeitung und Auswertung der Eingangsdaten und Steuerbefehle in den bevorzugten Ausführungsbeispielen ohne die Abschalteinheit, d.h die Abschalteinheit ist nicht in die Verarbeitung und Auswertung der Eingangsdaten und Steuerbefehle eingebunden. Die Funktionen von Abschalteinheit und E/A-Einheit sind also klar getrennt und unabhängig voneinander.

Allerdings überwacht die Abschalteinheit anhand ihrer speziellen Verifikationsdaten, dass die gekoppelte E/A-Einheit nur Steuerbefehle ausführt, die tatsächlich für die gekoppelte E/A-Einheit bestimmt sind. Diese Überwachung ist der wesentliche Zweck der Kopplung. Daher ist die Abschalteinheit abseits der Eingangsdaten und Steuerbefehle an die E/A-Einheit gekoppelt und die Eingangsdaten und Steuerbefehle laufen in den bevorzugten Ausführungsbeispielen vollständig an der Abschalteinheit vorbei.

Die neue Abschalteinheit kann für sich genommen nicht gewährleisten, dass die E/A-Einheit fehlerfrei funktioniert und jeweils zum richtigen Zeitpunkt die von der Steuereinheit vorgesehenen Steuerbefehle ausführt. Die Abschalteinheit kann jedoch gewährleisten, dass die E/A-Einheit keine fälschlicherweise empfangenen Steuerbefehle ausführt, wie etwa Steuerbefehle, die an eine andere E/A-Einheit adressiert waren und die aufgrund eines Fehlers im Adressfeld des Datentelegramms fälschlicherweise empfangen wurden. Damit sorgt die Abschalteinheit dafür, Fehler auszuschließen, die andernfalls durch Verwendung eines fehlersicheren Kommunikationsnetzwerks ausgeschlossen werden müssen. Mit anderen Worten ermöglicht die neue Abschalteinheit die Verwendung eines Standard-Kommunikationsnetzwerkes, das für sich genommen keine fehlerfreie Übermittlung von Datentelegrammen gewährleistet.

Die neue Vorrichtung und das neue Verfahren besitzen somit den Vorteil, dass sie ohne ein proprietäres, fehlersicheres Kommunikationsnetzwerk realisiert werden können. Vorzugsweise beinhalten die neue Vorrichtung und das neue Verfahren daher ein Kommunikationsnetzwerk, das für sich genommen keine Fehlersicherheit im Sinne von SIL 2 gemäß IEC 61508, Kategorie 3 gemäß EN 954 oder vergleichbarer Anforderungen erfüllt. Infolgedessen kann die lokale E/A-Einheit mit einer Standardschnittstelle zum Anschluss an ein beliebiges, nicht-fehlersicheres Kommunikationsnetzwerk ausgebildet sein. Vorteilhaft ist die E/A-Einheit einkanalig ausgebildet, und sie verarbeitet die Eingangsdaten und Steuerbefehle dementsprechend im Wesentlichen einkanalig. Die neue Vorrichtung und das neue Verfahren lassen sich daher wesentlich kostengünstiger realisieren als die Vorrichtung und das Verfahren aus der eingangs genannten DE 10 2007 039 154 A1. Die oben genannte Aufgabe ist vollständig gelöst.

In einer bevorzugten Ausgestaltung der Erfindung ist die E/A-Einheit dazu ausgebildet, jedes von der Steuereinheit empfangene Datentelegramm, das einen Steuerbefehl für die E/A-Einheit enthält, durch ein Antworttelegramm zu quittieren, das das tatsächliche Ausführen des Steuerbefehls signalisiert. Bevorzugt enthält das Antworttelegramm weitere Verifikationsdaten, die die Abschalteinheit bereitstellt, um der Steuereinheit eine redundante Überprüfung der tatsächlichen Herkunft des Antworttelegramms zu ermöglichen.

In dieser Ausgestaltung erhält die Steuereinheit zu jedem an die E/A-Einheit versendeten Datentelegramm eine Ausführungsbestätigung von der E/A-Einheit, so dass die Steuereinheit unabhängig von dem verwendeten Kommunikationsnetzwerk überwachen kann, ob die E/A-Einheit einen Steuerbefehl tatsächlich auch ausgeführt hat. Aufgrund der weiteren Verifikationsdaten von der Abschalteinheit, die in dem Antworttelegramm integriert sind, kann die Steuereinheit ferner überwachen, dass das Antworttelegramm von der "richtigen" E/A-Einheit stammt, nicht etwa von einer anderen an das Kommunikationsnetzwerk angeschlossenen E/A-Einheit. Die Ausgestaltung besitzt daher einen weiteren Fehlererkennungsmechanismus, der sich der neuen Abschalteinheit bedient.

In einer weiteren Ausgestaltung besitzt die E/A-Einheit eine Netzschnittstelle zum Anschluss an das Kommunikationsnetzwerk und eine lokale Datenschnittstelle, an der die Abschalteinheit angeschlossen ist, um die Verifikationsdaten zu empfangen. In besonders bevorzugten Ausgestaltungen ist die lokale Datenschnittstelle eine serielle Standardschnittstelle, insbesondere eine RS 485-Schnittstelle, eine RS 422- oder eine RS 232-Schnittstelle.

Diese Ausgestaltung ermöglicht eine sehr einfache und kostengünstige Kopplung der lokalen Abschalteinheit und der E/A-Einheit. Sämtliche Datentelegramme aus dem Kommunikationsnetzwerk, die an die E/A-Einheit adressiert sind, müssen zunächst die Netzschnittstelle passieren. Erst nach der Netzschnittstelle erfolgt die Aufteilung der im Datentelegramm enthaltenen Daten und insbesondere die Weiterleitung der Verifikationsdaten an die Abschalteinheit. Alternativ hierzu könnte die Abschalteinheit in anderen Ausgestaltungen die Datentelegramme an der Netzschnittstelle mithören, was jedoch nicht bei allen Kommunikationsnetzwerken und Netzschnittstellen ohne Weiteres möglich ist.

In einer weiteren Ausgestaltung besitzt die E/A-Einheit eine Anzahl von Anschlüssen zum Anschluss der Aktoren, wobei die Abschalteinheit dazu ausgebildet ist, die Anschlüsse in Abhängigkeit von den Verifikationsdaten zu deaktivieren. In einer besonders bevorzugten Variante dieser Ausgestaltung ist die Abschalteinheit dazu ausgebildet, die E/A-Einheit zumindest teilweise stromlos zu schalten, um die Ausgabe von Signalen an die Aktoren zu unterbinden. In einer weiteren Variante ist die Abschalteinheit dazu ausgebildet, auch die Anschlüsse zum Anschluss der Sensoren zu deaktivieren und insbesondere stromlos zu schalten, um auf diese Weise zu verhindern, dass ein authentisch erscheinendes Antworttelegramm bzw. ein von der Steuereinheit erwartetes Antworttelegramm in der E/A-Einheit generiert und versendet werden kann.

Diese Ausgestaltungen ermöglichen eine zuverlässige Deaktivierung der E/A-Einheit auf sehr einfache und kostengünstige Weise mit der Folge, dass der reguläre Steuerungsablauf sofort unterbrochen wird, wenn ein unsicherer Zustand in der Kommunikation auftritt.

In einer weiteren Ausgestaltung ist die Abschalteinheit getrennt von der E/A-Einheit angeordnet.

In dieser Ausgestaltung besitzt die Abschalteinheit ein eigenes Gerätegehäuse, das separat von der E/A-Einheit angeordnet ist. Die Abschalteinheit und die E/A-Einheit können natürlich auch in dieser Ausgestaltung in einen gemeinsamen Schaltschrank oder dergleichen angeordnet sein. Gleichwohl ist die Abschalteinheit in dieser Ausgestaltung ein separates Gerät, das über ein Kabel, beispielsweise über ein serielles Datenkabel, mit der E/A-Einheit gekoppelt ist, wobei sowohl das Gehäuse der Abschalteinheit als auch das Gehäuse der E/A-Einheit einen entsprechenden Stecker oder eine entsprechende Buchse besitzen. Die Ausgestaltung ermöglicht eine sehr kostengünstige und universelle Realisierung, da die Abschalteinheit sehr einfach an nahezu beliebige E/A-Einheiten angeschlossen werden kann. Die neue Vorrichtung und das neue Verfahren sind daher nicht nur in Bezug auf das Kommunikationsnetzwerk, sondern auch in Bezug auf die lokale E/A-Einheit weitgehend hersteller- und systemunabhängig.

In einer weiteren Ausgestaltung ist die Abschalteinheit mehrkanalig aufgebaut, um die Verifikationsdaten redundant zu verarbeiten.

Diese Ausgestaltung ermöglicht eine höhere Fehlersicherheit bei der Verarbeitung der Verifikationsdaten. Infolgedessen ist eine unsichere Steuerungsoperation infolge eines fälschlicherweise empfangenen Datentelegramms noch zuverlässiger ausgeschlossen. Andererseits besitzt diese Ausgestaltung den großen Vorteil, dass die mehrkanalige Datenverarbeitung in der neuen Abschalteinheit konzentriert werden kann, was die Verwendung von kostengünstigen, nicht-fehlersicheren E/A-Einheiten erleichtert.

In einer weiteren Ausgestaltung beinhalten die Verifikationsdaten eine - vorzugsweise weltweit einmalige - Adresse, die die Abschalteinheit eindeutig identifiziert.

Die bevorzugte, weltweit einmalige Adresse kann beispielsweise dadurch realisiert werden, dass die Adresse eine individuelle, eindeutige Herstelleridentifikation sowie eine von dem Hersteller einmalig vergebene Geräteidentifikationsnummer enthält. Da die Abschalteinheit keinen direkten Anschluss an das Kommunikationsnetzwerk benötigt und insofern unabhängig von dem Kommunikationsprotokoll ist, das in dem Kommunikationsnetzwerk verwendet wird, kann der Hersteller die eindeutige Adresse frei wählen und beispielsweise mit kryptologischen Verfahren gegen Nachahmung und anderweitige Verwendung schützen. Vorzugsweise wird die Adresse der Abschalteinheit hier zusätzlich zu einer weiteren Adresse verwendet, die die E/A-Einheit im Rahmen des Kommunikationsprotokolls identifiziert. Die Adresse der E/A-Einheit ist typischerweise in dem Protokollteil des Datentelegramms enthalten, wohingegen die Adresse der Abschalteinheit in dem Nutzdatenteil übertragen wird. Die separate Adressierung der Abschalteinheit unabhängig und zusätzlich zu der Adresse der E/A-Einheit ermöglicht eine einfache und sehr zuverlässige Überprüfung, ob ein Datentelegramm von der Steuereinheit die "richtige" E/A-Einheit erreicht hat. Die Ausgestaltung ermöglicht daher eine besonders hohe Fehlersicherheit in Bezug auf Adressverfälschungen.

In einer weiteren Ausgestaltung ist die Steuereinheit dazu ausgebildet, eine Vielzahl von Datentelegrammen in definierten Zeitabständen an die E/A-Einheit zu senden, wobei die Abschalteinheit dazu ausgebildet ist, die Zeitabstände zu überwachen und in Abhängigkeit davon die E/A-Einheit zu deaktivieren. Vorzugsweise ist die Abschalteinheit dazu ausgebildet, die E/A-Einheit zu deaktivieren, wenn die Steuereinheit über einen längeren Zeitraum hinweg keine Datentelegramme an die E/A-Einheit versendet. Der längere Zeitraum kann beispielsweise dadurch erkannt werden, dass über eine definierte Anzahl von Zeitintervallen hinweg keine Datentelegramme empfangen wurden.

In dieser Ausgestaltung übernimmt die Abschalteinheit nicht nur die Aufgabe, den richtigen Adressaten an dem Kommunikationsnetzwerk zu gewährleisten. Zusätzlich überwacht die Abschalteinheit den regelmäßigen und zeitlich korrekten Empfang von Datentelegrammen. In den bevorzugten Varianten dieser Ausgestaltung erfolgt auch diese Überwachung fehlersicher, was durch einen mehrkanaligen Aufbau der Abschalteinheit erreicht werden kann. Die Ausgestaltung besitzt den Vorteil, dass die E/A-Einheit automatisch deaktiviert wird, wenn die Kommunikationsverbindung mit der Steuereinheit abreißt oder zeitweilig unterbrochen ist. Infolgedessen ermöglicht diese Ausgestaltung geringere Anforderungen an die Verfügbarkeit des Kommunikationsnetzwerks. Beispielsweise erleichtert diese Ausgestaltung die Verwendung des Internets als Kommunikationsnetzwerk. Andererseits gewährleistet diese Ausgestaltung, dass die E/A-Einheit in den "steuerungslosen" Zeiträumen, in denen keine Kommunikation mit der Steuereinheit stattfindet, keine Veränderung an den Aktoren bewirken kann und somit den Systemzustand nicht "unbemerkt" von der Steuereinheit verändern kann. Des weiteren besitzt diese Ausgestaltung den Vorteil, dass die Steuereinheit die Deaktivierung der E/A-Einheit bewirken kann, indem die Steuereinheit das Versenden von Datentelegrammen an die E/A-Einheit für eine Zeitspanne unterbricht, die größer ist als die definierten Zeitabstände. Für diesen Fall ist die Steuereinheit dazu ausgebildet, das Versenden von Datentelegrammen über die genannte Zeitspanne aussetzt.

In einer weiteren Ausgestaltung beinhalten die Verifikationsdaten eine laufende Nummer, die eine Reihenfolge der Datentelegramme repräsentiert.

In dieser Ausgestaltung ist die Abschalteinheit in der Lage, den Ausfall bzw. das Ausbleiben eines Datentelegramms zuverlässig zu erkennen. Die Ausgestaltung trägt dazu bei, die Aktualität eines empfangenen Datentelegramms zu gewährleisten, da ein im Kommunikationsnetzwerk "steckengebliebenes" Datentelegramm als solches erkannt werden kann, wenn es zu einem späteren Zeitpunkt an der E/A-Einheit empfangen wird. Eine Verwechslung mit einem jüngeren Datentelegramm kann anhand der laufenden Nummer ausgeschlossen werden. Die Fehlersicherheit der neuen Vorrichtung und des neuen Verfahrens ist nochmals erhöht.

In einer weiteren Ausgestaltung erhalten die Verifikationsdaten eine Prüfsumme, die im Wesentlichen die Verifikationsdaten selbst charakterisiert.

Die Verwendung von Prüfsummen, insbesondere in Form einer sogenannten CRC (*Cyclic Redundancy Checksum*) ist im Zusammenhang mit der Übertragung von Datentelegrammen über ein Kommunikationsnetzwerk für sich genommen bekannt. Die vorliegende Ausgestaltung verwendet eine Prüfsumme, die praktisch nur die Verifikationsdaten selbst verifiziert. Mit anderen Worten ist diese Prüfsumme unabhängig oder zumindest weitgehend unabhängig von anderen Dateninhalten des Datentelegramms. Die Ausgestaltung besitzt den Vorteil, dass die Abschalteinheit die Prüfsumme anhand der weitergeleiteten Verifikationsdaten eigenständig berechnen und überprüfen kann. Alternativ wäre es prinzipiell denkbar, eine über das gesamte Datentelegramm berechnete Prüfsumme zu verwenden. Diese Alternative besitzt jedoch den Nachteil, dass die Abschalteinheit zur lokalen Überprüfung der Prüfsumme sämtliche Dateninhalte des Datentelegramms kennen muss. Die bevorzugte Ausgestaltung mit einer speziellen Prüfsumme, die sich lediglich auf den für die Abschalteinheit interessanten Teil des Datentelegramms bezieht, ermöglicht eine schnellere und einfachere Überwachung der Datentelegramme.

In einer weiteren Ausgestaltung beinhalten die Datentelegramme einen Protokollteil und einen Nutzdatenteil, wobei der Protokollteil in Abhängigkeit von dem Kommunikationsnetzwerk spezifiziert ist, und wobei die Verifikationsdaten im Nutzdatenteil angeordnet sind.

Der Nutzdatenteil des Datentelegramms ist in Bezug auf das Kommunikationsnetzwerk weitgehend unspezifiziert. Es handelt sich um denjenigen Teil des Datentelegramms, der den einzelnen Kommunikationsteilnehmern an dem Netzwerk weitgehend frei zur Verfügung steht. Beschränkungen können je nach verwendetem Netzwerkprotokoll beispielsweise in Bezug auf die Länge des Nutzdatenteils bestehen. Der Inhalt im Nutzdatenteil ist jedoch für den Betrieb des Kommunikationsnetzwerks bzw. die Übertragung der Datentelegramme ohne Bedeutung.

Demgegenüber enthält der Protokollteil sämtliche Informationen, die für die Übertragung von Datentelegrammen in dem Kommunikationsnetzwerk benötigt werden.

Hierzu gehören beispielsweise Absender- und/oder Adressinformationen, die den Absender und/oder Adressaten eines Datentelegramms identifizieren, Typinformationen, die den Typ des Datentelegramms spezifizieren, Längeninformationen über die Länge des Datentelegramms und anderes.

In dieser Ausgestaltung sind die Verifikationsdaten zumindest im Wesentlichen (bevorzugt vollständig) im Nutzdatenteil der Datentelegramme angeordnet. Diese Ausgestaltung trägt weiter dazu bei, die neue Vorrichtung und das neue Verfahren unabhängig von dem verwendeten Kommunikationsnetzwerk zu machen. Damit ermöglicht diese Ausgestaltung eine noch freiere Verwendung vorhandener Kommunikationsstrukturen.

In einer weiteren Ausgestaltung weist das Anwenderprogramm einen variablen ersten Programmteil und einen invarianten zweiten Programmteil auf, wobei der erste Programmteil die Steuerbefehle in Abhängigkeit von den Eingangsdaten bestimmt, und wobei der zweite Programmteil die Verifikationsdaten in die Datentelegramme integriert.

In bevorzugten Varianten dieser Ausgestaltung ist der erste Programmteil kompatibel zu der internationalen Norm IEC 61131, d.h. der erste Programmteil kann von einem Anwender mit Hilfe einer in IEC 61131 spezifizierten Programmiersprache erstellt und verändert werden. Demgegenüber ist der zweite Programmteil dem Zugriff des Anwenders weitgehend entzogen. Zumindest ist der zweite Programmteil nicht ohne Weiteres in einer IEC 61131-kompatiblen Programmiersprache änderbar. In einer besonders bevorzugten Variante ist der zweite Programmteil Teil des Betriebssystems oder der Runtime-Umgebung der Steuereinheit. Es ist jedoch denkbar, dass der Anwender den zweiten Programmteil innerhalb festgelegter Grenzen konfigurieren kann, beispielsweise um die weltweit einmalige Adresse der Abschalteinheit einzugeben.

Die Ausgestaltung besitzt den Vorteil, dass der für die Fehlersicherheit der neuen Vorrichtung und des neuen Verfahrens bedeutsame Teil, nämlich die Integration der Verifikationsdaten in die Datentelegramme, dem Zugriff des Anwenders entzogen ist. Dadurch werden Programmierfehler, die die Fehlersicherheit der Vorrichtung gefährden können, wirkungsvoller verhindert. Andererseits kann sich der Anwender auf die Programmierung der Logikfunktionen konzentrieren, die der Erzeugung der Steuerbefehle für die Aktoren dienen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Ausführungsbeispiels der neuen Vorrichtung,
- Fig. 2: eine vereinfachte Darstellung eines Datentelegramms, das bei der Vorrichtung aus Fig. 1 zur Verwendung kommt, und
- Fig. 3: die Vorrichtung aus Fig. 1 mit weiteren Details.

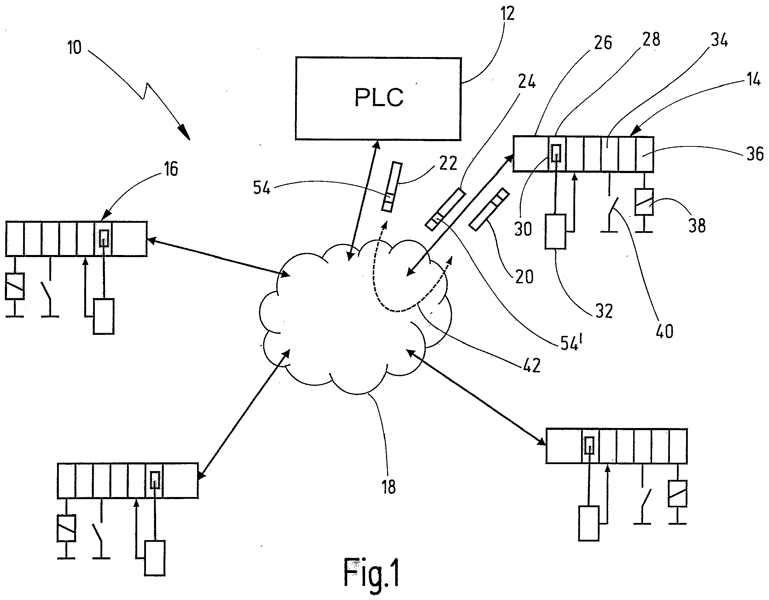

In Fig. 1 ist ein Ausführungsbeispiel der neuen Vorrichtung in seiner Gesamtheit mit der Bezugziffer 10 bezeichnet. Die Vorrichtung 10 dient hier zum Steuern einer Eisenbahnanlage, was eine bevorzugte Anwendung ist. Prinzipiell können die neue Vorrichtung und das neue Verfahren jedoch auch zum Steuern von anderen automatisierten Anlagen verwendet werden, insbesondere für Anlagen, die sicherheitsrelevante Steuerungsfunktionen ausführen.

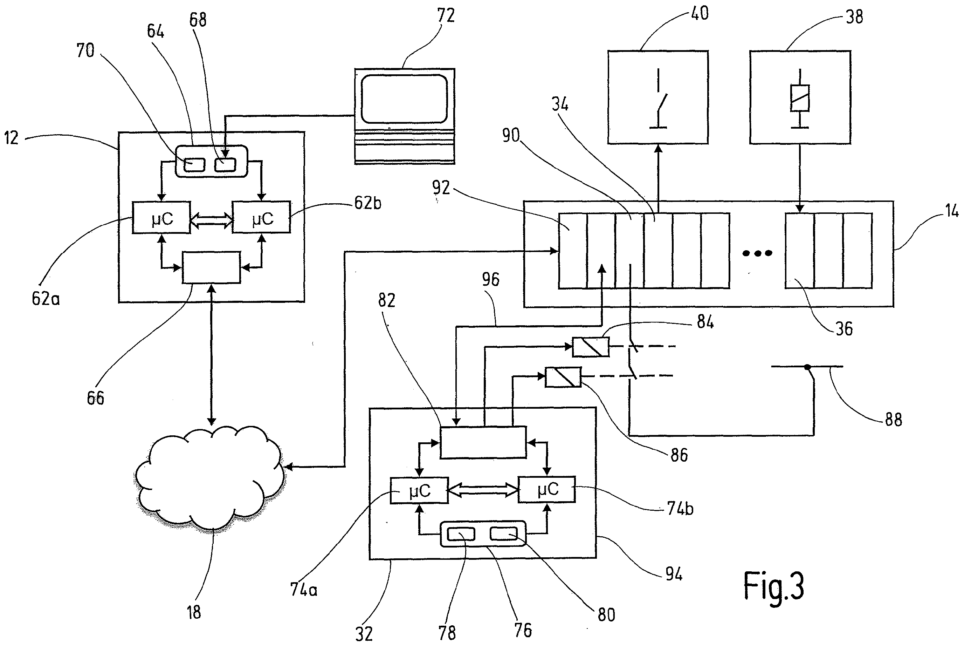

Die Vorrichtung 10 beinhaltet eine Steuereinheit 12, die bei einer Eisenbahnanlage in der Regel als zentrale Steuereinheit ausgebildet ist. Prinzipiell könnte es sich jedoch auch um eine dezentrale Steuereinheit handeln, die im Verbund mit anderen zentralen und/oder dezentralen Steuereinheiten (hier nicht dargestellt) arbeitet. In bevorzugten Ausführungsbeispielen ist die Steuereinheit 12 eine speicherprogrammierbare Steuerung, die in einer der Programmiersprachen programmierbar ist, die in der internationalen Norm IEC 61131 spezifiziert sind. In den bevorzugten Ausführungsbeispielen ist die Steuereinheit 12 eine eigensichere (fehlersichere) Steuereinheit gemäß SIL 3 der europäischen Norm EN 61508 oder eine Steuereinheit, die vergleichbaren Sicherheitsanforderungen genügt. Wie nachfolgend anhand Fig. 3 mit weiteren Details dargestellt ist, ist die Steuereinheit 12 in den bevorzugten Ausführungsbeispielen mehrkanalig-redundant aufgebaut. Eine solche Steuereinheit wird von der Anmelderin beispielsweise unter der Bezeichnung PSS® angeboten.

Die Vorrichtung 10 besitzt ferner eine oder mehrere lokale E/A-Einheiten, von denen in Fig. 1 beispielhaft zwei E/A-Einheiten mit den Bezugsziffern 14 und 16 bezeichnet sind. Die Steuereinheit 12 und die E/A-Einheiten 14, 16 sind über ein Kommunikationsnetzwerk 18 verbunden und sie tauschen Datentelegramme 20, 22, 24 über das Kommunikationsnetzwerk 18 aus. Typischerweise sind die E/A-Einheiten räumlich entfernt von der Steuereinheit 12 angeordnet.

Das Kommunikationsnetzwerk 18 kann beispielsweise ein "normales" Ethernet-Netzwerk, ein "normales" WLAN-Netzwerk oder das Internet sein. In den bevorzugten Ausführungsbeispielen ist das Kommunikationsnetzwerk 18 ein offenen Kommunikationsnetzwerk, das für sich genommen nicht die Anforderungen der SIL 3 oder vergleichbare Anforderungen an die Fehlersicherheit aufweist. In einem Ausführungsbeispiel ist das Kommunikationsnetzwerk 18 ein sogenanntes Profinet-Netzwerk, das den einschlägigen Fachleuten auf diesem Gebiet bekannt ist.

Die E/A-Einheiten 14, 16 sind in diesem Ausführungsbeispiel modular aufgebaut. Sie besitzen ein Kopfmodul 26 mit einer Kommunikationsschnittstelle (siehe Fig. 3, Bezugsziffer 92) zum Anschluss an das Kommunikationsnetzwerk 18. Das Kopfmodul 26 nimmt die Datentelegramme an der Kommunikationsschnittstelle auf, extrahiert die Nutzdaten und stellt diese den weiteren Modulen zur Verfügung. Darüber hinaus nimmt das Kopfmodul 26 Nutzdaten von den weiteren Modulen der E/A-Einheit entgegen und integriert diese in ein Datentelegramm, das als Antworttelegramm 24 an die Steuereinheit 12 versendet wird.

An das Kopfmodul 26 schließt sich hier ein Schnittstellenmodul 28 mit einer Datenschnittstelle 30 an. In bevorzugten Ausführungsbeispielen ist die Datenschnittstelle 30 eine Standardschnittstelle für eine serielle Datenübertragung, etwa eine RS 485-Schnittstelle, eine RS 422-Schnittstelle oder eine RS 232-Schnittstelle. An die Datenschnittstelle 30 ist eine lokale Abschalteinheit 32 angeschlossen.

An das Schnittstellenmodul 28 reihen sich in dem hier dargestellten Ausführungsbeispiel weitere Module 34, 36, die jeweils Anschlüsse zum Anschluss von Sensoren und/oder Aktoren bereitstellen. In dem Ausführungsbeispiel gemäß Fig. 1 ist an das Modul 36 ein Relais 38 angeschlossen, das über die E/A-Einheit 14 wahlweise bestromt werden kann. In den bevorzugten Ausführungsbeispielen dient das Relais 38 zum Umschalten einer Weiche oder eines Fahrsignals der Eisenbahnanlage.

An das Modul 34 ist hier ein Rückführkontakt 40 angeschlossen, der mit dem Relais 38 zwangsgekoppelt ist. Der Rückführkontakt 40 dient hier als Sensor, mit dessen Hilfe der aktuelle Schaltzustand des Relais 38 zurückgelesen werden kann.

Im Betrieb der Vorrichtung steuert die Steuereinheit 12 die Weichen und Fahrsignale der Eisenbahnanlage mit Hilfe der lokalen E/A-Einheiten 14, 16 an. Dazu erzeugt die Steuereinheit 12 in regelmäßigen Zeitintervallen ein Datentelegramm 20, 22, in dem Ausgangsdaten enthalten sind, die einen Steuerbefehl für die Relais 38 repräsentieren. In Fig. 1 sind zwei solche Datentelegramme 20, 22 dargestellt. Der zeitliche Abstand, mit dem die Steuereinheit 12 die Datentelegramme 20, 22 an die E/A-Einheit 14 versendet, ist mit einem Pfeil 42 angedeutet.

Jede adressierte E/A-Einheit empfängt die Datentelegramme 20, 22 und steuert die angeschlossenen Aktoren/Relais 38 entsprechend den erhaltenen Ausgangsdaten an. Außerdem ist jede E/A-Einheit hier dazu ausgebildet, den Schaltzustand eines angesteuerten Relais 38 mit Hilfe des Rückführkontakts 40 zurückzulesen. Der jeweilige Schaltzustand wird als Eingangsdatum mit einem Antwort-Datentelegramm 24 an die Steuereinheit 12 zurückgesendet. Auf diese Weise erhält die Steuereinheit 12 eine direkte Rückmeldung über den tatsächlichen Zustand eines angesteuerten Relais 38. Entspricht der zurückgelesene Schaltzustand nicht dem beauftragten Schaltzustand, wird eine Fehlermeldung generiert (hier nicht dargestellt) und/oder es wird ein Notprogramm gestartet, das die Vorrichtung 10 in einen gefahrlosen Zustand überführt.

Die Darstellung in Fig. 1 ist hier aus Gründen der Übersichtlichkeit vereinfacht. In der Praxis kommen häufig eine Vielzahl von Relais 38 und/oder andere Aktoren sowie eine Vielzahl von Sensoren zum Einsatz, und die Steuereinheit 12 ist dazu ausgebildet, Plausibilitätsprüfungen anhand der Vielzahl der Sensorsignale durchzuführen. Des Weiteren können redundante Aktoren vorgesehen sein, um die Vorrichtung 10 bei Auftreten eines Fehlers in einen gefahrlosen Zustand zu überführen.

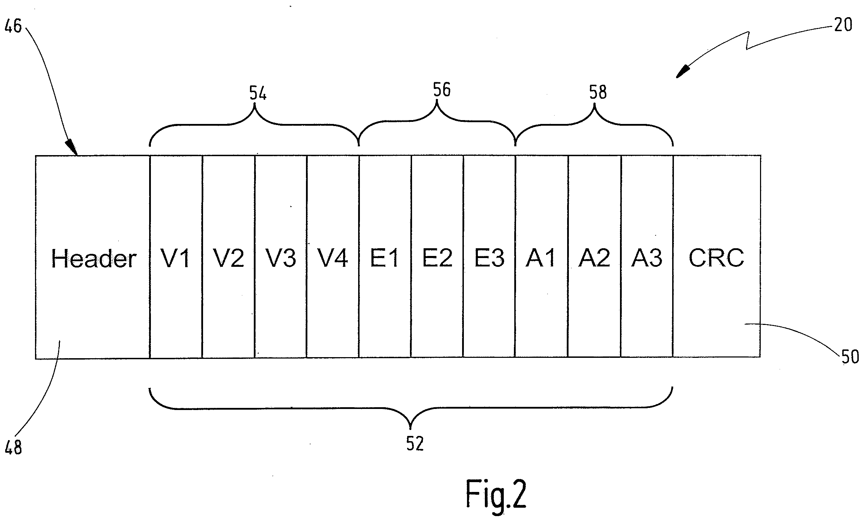

Gemäß einem Aspekt der Erfindung erzeugt die Steuereinheit 12 nicht nur Ausgangs- bzw. Steuerdaten zum Ansteuern der Aktoren, sondern zusätzlich noch Verifikationsdaten, die mit den Datentelegrammen 20, 22 an die E/A-Einheit14 übertragen werden. Die Verifikationsdaten werden von der E/A-Einheit 14 über die Datenschnittstelle 30 an die lokale Abschalteinheit 32 übertragen. Wie nachfolgend anhand der Fig. 2 und 3 im Detail erläutert ist, überprüft die Abschalteinheit 32 anhand der Verifikationsdaten insbesondere, ob das empfangene Datentelegramm 20, 22 auch tatsächlich an die empfangende E/A-Einheit 14 adressiert war. Falls dies nicht der Fall ist oder ein anderer Kommunikationsfehler von der Abschalteinheit 32 anhand der Verifikationsdaten erkannt wird, deaktiviert die Abschalteinheit 32 die Module 34, 36 der E/A-Einheit 14, um auf diese Weise eine fehlerhafte Ansteuerung der Aktoren 38 zu verhindern und zusätzlich eine Fehlermeldung an die Steuereinheit 12 zu initiieren.

In bevorzugten Ausführungsbeispielen trennt die Abschalteinheit 32 die Module 34, 36 von der Stromversorgung, wie dies weiter unten anhand von Fig. 3 dargestellt ist.

Um auch im deaktivierten Zustand eine Kommunikation mit der Steuereinheit 12 zu ermöglichen, werden in bevorzugten Ausführungsbeispielen lediglich die Module 34, 36 deaktiviert, die nach dem Kopfmodul 26 und dem Schnittstellenmodul 28 angeordnet sind.

Fig. 2 zeigt ein Ausführungsbeispiel des Datentelegramms 20 mit weiteren Details. Das Datentelegramm 20 besitzt - ebenso wie die weiteren Datentelegramme 22, 24 - einen Protokollteil 46, der hier vor allem aus einem sogenannten Header 48 am Anfang des Datentelegramms 20 und einer Prüfsumme 50 am Ende des Datentelegramms besteht. Der Header 48 kann Adressinformationen beinhalten, die den Absender und/oder Empfänger des Datentelegramms identifizieren, wie dies beispielsweise von Ethernet-Datentelegrammen bekannt ist. Der Nutzdatenteil 52 ist hier zwischen dem Header 48 und der Prüfsumme 50 angeordnet. Er beinhaltet gemäß einem Aspekt der Erfindung Verifikationsdaten 54 sowie Eingangsdaten 56 und Steuerbefehle 58. Die Eingangsdaten 56 und Steuerbefehle 58 können auch wechselweise in dem Datentelegramm 20 versendet werden, je nachdem ob das Datentelegramm von der Steuereinheit 12 an die E/A-Einheit 14 gesendet wird oder umgekehrt. Mit anderen Worten ist es nicht zwingend erforderlich, dass Eingangsdaten 56 und Steuerbefehle 58 gleichzeitig in dem Datentelegramm enthalten sind.

Die Eingangsdaten 56 repräsentieren die Ist-Zustände der Sensoren 40. Die Ausgangsdaten 58 repräsentieren Steuerbefehle bzw. Sollzustände für die Aktoren 38. Die Verifikationsdaten 54 werden gemäß einem Aspekt der Erfindung in die Datentelegramme 20, 22, 24 integriert, so dass die Abschalteinheit 32 und - in den bevorzugten Ausführungsbeispielen - die Steuereinheit 12 verifizieren können, dass die Datentelegramme von der "richtigen" E/A-Einheit empfangen wurden.

In einem bevorzugten Ausführungsbeispiel beinhalten die Verifikationsdaten 54 eine weltweit einmalige Adresse, die die Abschalteinheit 32 eindeutig identifiziert. Diese Adresse ist in Fig. 2 beispielsweise in dem Verifikationsdatum V1 repräsentiert.

Des Weiteren beinhalten die Verifikationsdaten 54 hier eine laufende Nummer, die in Fig. 2 mit V2 dargestellt ist. Die laufende Nummer V2 wird für jedes Datentelegramm einer Folge von Datentelegrammen inkrementiert, um die Aktualität eines empfangenen Datentelegramms verifizieren zu können.

Des Weiteren beinhalten die Verifikationsdaten 54 hier eine Zeitangabe, die beispielsweise eine lokale Sendezeit des Datentelegramms repräsentiert. Die lokale Sendezeit ist in Fig. 2 mit V3 dargestellt. Anhand der Zeitangabe kann der Empfänger die Aktualität eines empfangenen Datentelegramms überprüfen.

Schließlich beinhalten die Verifikationsdaten 54 in den bevorzugten Ausführungsbeispielen eine Prüfsumme V4, die zusätzlich zu der Prüfsumme 50 verwendet wird. Die Prüfsumme V4 charakterisiert im Wesentlichen die Verifikationsdaten 54 selbst, d.h. sie lässt sich im Wesentlichen anhand der Verifikationsdaten 54 berechnen. Prinzipiell ist es aber möglich, über die eigentlichen Verifikationsdaten 54 hinaus noch weitere Bits in die Berechnung der Prüfsumme V4 einzuschließen, beispielsweise um eine längere Bitfolge und damit eine höhere Fehlererkennungswahrscheinlichkeit zu ermöglichen.

In weiteren Ausführungsbeispielen können die Verifikationsdaten 54 ein oder mehrere Bits beinhalten, die einen Abschaltbefehl repräsentieren, der die Abschalteinheit dazu veranlasst, die E/A-Einheit gezielt zu deaktivieren.

Fig. 2 zeigt ein Datentelegramm 20, das von der Steuereinheit 12 an die E/A-Einheit 14 versendet wird. Es enthält die Verifikationsdaten 54, die von der E/A-Einheit an die Abschalteinheit weitergeleitet werden. Die Antworttelegramme 24 sind jedoch prinzipiell genauso aufgebaut. Anstelle der Verifikationsdaten 54 enthalten sie weitere Verifikationsdaten 54', die von der Abschalteinheit 32 erzeugt und an die E/A-Einheit übertragen wurden. Auch die weiteren Verifikationsdaten 54' enthalten in den bevorzugten Ausführungsbeispielen die weltweit einmalige Adresse V1, eine laufende Nummer V2, eine Zeitangabe V3 und/oder eine Prüfsumme V4. Ferner können die Verifikationsdaten 54' ein oder mehrere Bits beinhalten, die einen Systemzustand der Abschalteinheit repräsentieren, wobei der Systemzustand insbesondere eine Information darüber beinhaltet, ob die Abschalteinheit die E/A-Einheit deaktiviert hat oder nicht.

Fig. 3 zeigt die Vorrichtung 10 mit weiteren Details. Gleiche Bezugszeichen bezeichnen dieselben Elemente wie zuvor.

Die Steuereinheit 12 ist hier mehrkanalig-redundant aufgebaut. In einigen Ausführungsbeispielen besitzt sie mehrere Prozessoren 62a, 62b, die redundant zueinander arbeiten und sich gegenseitig überprüfen, indem sie ihre Verarbeitungsergebnisse miteinander vergleichen. Des Weiteren besitzt die Steuereinheit 12 einen Programmspeicher 64 und eine Netzschnittstelle 66 zum Anschluss an das Kommunikationsnetzwerk 18. Im Programmspeicher 64 ist ein Anwenderprogramm gespeichert, das in den bevorzugten Ausführungsbeispielen einen ersten Programmteil 68 und einen zweiten Programmteil 70 beinhaltet. Der erste Programmteil 68 ist hier ein variabler Programmteil, der von einem Anwender mit Hilfe eines Programmiertools 72 geändert werden kann. Bevorzugt kann der Anwender den variablen Programmteil 68 in einer IEC 61131-kompatiblen Programmiersprache auf dem Programmiertool 72 erstellen und in den Programmspeicher 64 laden. Das Programmiertool 72 kann ein herkömmlicher PC sein, auf dem ein geeignetes Programm zu Erstellen von Anwenderprogrammen gemäß IEC 61131 abläuft.

Der zweite Programmteil 70 ist in den bevorzugten Ausführungsbeispielen ein invarianter Programmteil, der vom Anwender nicht oder zumindest nicht ohne Weiteres verändert werden kann. In diesen Ausführungsbeispielen bestimmt der erste, variable Programmteil die logischen Verknüpfungen, mit denen die Eingangsdaten der Sensoren verarbeitet werden, um die Ausgangsdaten für die Aktoren zu erzeugen. Demgegenüber integriert der zweite Programmteil 70 die Verifikationsdaten 54 in die Datentelegramme 20, 22, ohne dass der Anwender/Programmierer der Erstellung der Verifikationsdaten in seinem Programmteil 68 besondere Aufmerksamkeit schenken muss. Der Programmteil 70 kann Teil des Betriebssystems der Steuereinheit 12 sein. Es ist jedoch auch möglich, dass der Programmteil 70 als gekapseltes Modul vom Anwender in den Programmspeicher 64 geladen wird. In bevorzugten Ausführungsbeispielen kann der Anwender den invarianten Programmteil 70 zwar in seiner Funktion nicht verändern, er kann jedoch einzelne Parameter konfigurieren, etwa die weltweite einmalige Adresse V1 der E/A-Einheiten 14, 16.

Die Abschalteinheit 32 ist in den bevorzugten Ausführungsbeispielen ebenfalls mehrkanalig-redundant aufgebaut, wie dies anhand von zwei Prozessoren 74a, 74b dargestellt ist. Des Weiteren besitzt die Abschalteinheit 32 einen Speicher 76, in dem hier die weltweit einmalige Adresse 78 sowie ein Betriebsprogramm (Firmware) gespeichert sind. Bevorzugt ist der Speicher 76 ein nicht-flüchtiger Speicher, etwa ein internes EEPROM oder ein wechselbarer Festspeicher, wie eine Chipkarte, SD-Karte, CF-Karte o.ä., die in einen geeigneten Halter lösbar eingesteckt und wahlweise entnommen werden kann.

Des Weiteren besitzt die Abschalteinheit 32 eine Schnittstelle 82, die hier einerseits die Datenschnittstelle zur Kopplung mit der E/A-Einheit 14 beinhaltet. Darüber hinaus beinhaltet die Schnittstelle 82 hier zwei Ausgänge zum Ansteuern von zwei Relais 84, 86, mit deren Hilfe die Abschalteinheit 32 die Module 34, 36 von einer Stromversorgung 88 trennen kann. In einem Ausführungsbeispiel wird der Strom zum Betrieb der Eingangsmodule 34 und Ausgangsmodule 36 über ein spezielles Einspeisemodul 90 in die E/A-Einheit eingespeist, und die Abschalteinheit 32 trennt das Einspeisemodul 90 von der Stromversorgung 88.

Die E/A-Einheit 14 besitzt darüber hinaus das bereits erwähnte Kopfmodul 26 mit der Netzschnittstelle, die in Fig. 3 mit der Bezugsziffer 92 bezeichnet ist.

Die Relais 84, 86 bilden zusammen mit der Schnittstelle 82 einen Abschaltteil der Abschalteinheit 32, mit dessen Hilfe die Abschalteinheit 32 die E/A-Einheit 14 zumindest teilweise deaktivieren kann. Anstelle von Relais 84, 86 können auch andere Schaltelemente verwendet sein, etwa Schütze, Transistoren und dergleichen. Darüber hinaus können die Schaltelemente 84, 86 in das Gehäuse 94 der Abschalteinheit 32 integriert sein.

In den bevorzugten Ausführungsbeispielen ist die Abschalteinheit 32 ein gekapseltes "Stand Alone"-Gerät, das mit einem eigenen Gerätegehäuse 94 getrennt von der E/A-Einheit 14 angeordnet wird und über ein Schnittstellenkabel 96 mit der E/A-Einheit gekoppelt wird. In anderen Ausführungsbeispielen kann die Abschalteinheit 32 als gehäuselose Einsteckkarte und/oder als Modul der E/A-Einheit 14 realisiert sein. In einigen Ausführungsbeispielen kann die Abschalteinheit 32 einen oder mehrere weitere Eingänge besitzen, um ein fehlersicheres Meldegerät, etwa einen Not-Aus-Taster anzuschließen. Die Abschalteinheit 32 ist in diesen Fällen dazu ausgebildet, die gekoppelte E/A-Einheit 14 auch in Abhängigkeit vom Betätigen des fehlersicheren Meldegerätes zu deaktivieren.

## Patentansprüche

1. Abschalteinheit zur Verwendung in einer Vorrichtung zum Steuern einer automatisierten Anlage, insbesondere einer Eisenbahnanlage, wobei die Anlage eine programmierbare Steuereinheit (12) zum Ausführen eines Anwenderprogramms (68, 70) und eine lokale E/A-Einheit (14) aufweist, an die eine Anzahl von Sensoren (40) und Aktoren (38) angeschlossen sind, und wobei die Steuereinheit (12) und die E/A-Einheit (14) dazu ausgebildet sind, Datentelegramme (20, 22, 24) über das Kommunikationsnetzwerk (18) auszutauschen, um Eingangsdaten und Steuerbefehle zu übertragen,
wobei die Abschalteinheit umfasst:
eine Datenschnittstelle (82) zum Anschluss an die lokale E/A-Einheit (14),
einen Datenverarbeitungsteil (74) zum Verarbeiten von Verifikationsdaten (54), die die Steuereinheit (12) in die Datentelegramme (20, 22) für die E/A-Einheit (14) integriert und die über die Datenschnittstelle (30) zuführbar sind, und
einen Abschaltteil (84, 86), der dazu ausgebildet ist, die E/A-Einheit (14) in Abhängigkeit von den Verifikationsdaten (54) zu deaktivieren,
und wobei die Abschalteinheit in die Verarbeitung und Übertragung der Eingangsdaten und Steuerbefehle nicht eingebunden ist, so dass die Funktionen von Abschalteinheit (32) und E/A-Einheit (14) getrennt und unabhängig voneinander sind.

2. Vorrichtung zum Steuern einer automatisierten Anlage, insbesondere einer Eisenbahnanlage, die Sensoren (40) und Aktoren (38) aufweist, mit einer programmierbaren Steuereinheit (12) zum Ausführen eines Anwenderprogramms (68, 70), mit einer lokalen E/A-Einheit (14), an die eine Anzahl der Sensoren (40) und Aktoren (38) angeschlossen sind, mit einer lokalen Abschalteinheit (32), die mit der lokalen E/A-Einheit (14) gekoppelt ist, und mit einem Kommunikationsnetzwerk (18), das die Steuereinheit (12) und die lokale E/A-Einheit (14) verbindet, wobei die Steuereinheit (12) dazu ausgebildet ist, Eingangsdaten von den Sensoren (40) in Abhängigkeit von dem Anwenderprogramm (68, 70) zu verarbeiten, um Steuerbefehle für die Aktoren (38) zu erzeugen, wobei die Steuereinheit (12) und die E/A-Einheit (14) dazu ausgebildet sind, Datentelegramme (20, 22, 24) über das Kommunikationsnetzwerk (18) auszutauschen, um die Eingangsdaten und die Steuerbefehle zu übertragen, wobei die Steuereinheit (12) dazu ausgebildet ist, Verifikationsdaten (54) in die Datentelegramme (20, 22) für die E/A-Einheit (14) zu integrieren, und wobei die Abschalteinheit (32) dazu ausgebildet ist, die E/A-Einheit (14) in Abhängigkeit von den Verifikationsdaten (54) zu deaktivieren, **dadurch gekennzeichnet, dass** die lokale Abschalteinheit (32) nach Anspruch 1 ausgebildet ist..

3. Vorrichtung nach Anspruch 2, **dadurch gekennzeichnet, dass** die E/A-Einheit (14) dazu ausgebildet ist, jedes von der Steuereinheit (12) empfangene Datentelegramm (20, 22), das einen Steuerbefehl für die E/A-Einheit (14) enthält, durch ein Antworttelegramm (24) zu quittieren, das das tatsächliche Ausführen des Steuerbefehls signalisiert.

4. Vorrichtung nach Anspruch 2 oder 3, **dadurch gekennzeichnet, dass** die E/A-Einheit (14) eine Netzschnittstelle (92) zum Anschluss an das Kommunikationsnetzwerk (18) und eine lokale Datenschnittstelle (30) besitzt, an der die Abschalteinheit (32) angeschlossen ist, um die Verifikationsdaten (54) zu empfangen.

5. Vorrichtung nach Anspruch 4, **dadurch gekennzeichnet, dass** die lokale Datenschnittstelle (30) eine serielle Standardschnittstelle ist.

6. Vorrichtung nach Anspruch 4 oder 5, **dadurch gekennzeichnet, dass** die E/A-Einheit (14) eine Anzahl von Anschlüssen (36) zum Anschluss der Aktoren (38) besitzt, wobei die Abschalteinheit (32) dazu ausgebildet ist, die Anschlüsse (36) in Abhängigkeit von den Verifikationsdaten (54) zu deaktivieren.

7. Vorrichtung nach einem der Ansprüche 2 bis 6, **dadurch gekennzeichnet, dass** die Abschalteinheit (32) getrennt von der E/A-Einheit (14) angeordnet ist.

8. Vorrichtung nach einem der Ansprüche 2 bis 7, **dadurch gekennzeichnet, dass** die Abschalteinheit (32) mehrkanalig aufgebaut ist, um die Verifikationsdaten (54) redundant zu verarbeiten.

9. Vorrichtung nach einem der Ansprüche 2 bis 8, **dadurch gekennzeichnet, dass** die Verifikationsdaten (54) eine Adresse (V1) beinhalten, die die Abschalteinheit (32) eindeutig identifiziert.

10. Vorrichtung nach einem der Ansprüche 2 bis 9, **dadurch gekennzeichnet, dass** die Steuereinheit (12) dazu ausgebildet ist, eine Vielzahl von Datentelegrammen (20, 22) in definierten Zeitabständen (42) an die E/A-Einheit (14) zu senden, wobei die Abschalteinheit (32) dazu ausgebildet ist, die Zeitabstände (42) zu überwachen und in Abhängigkeit davon die E/A-Einheit (14) zu deaktivieren.

11. Vorrichtung nach einem der Ansprüche 2 bis 10, **dadurch gekennzeichnet, dass** die Verifikationsdaten (54) eine laufende Nummer (V3) beinhalten, die eine Reihenfolge der Datentelegramme (20, 22) repräsentiert.

12. Vorrichtung nach einem der Ansprüche 2 bis 11, **dadurch gekennzeichnet, dass** die Verifikationsdaten (54) eine Prüfsumme (V4) enthalten, die im Wesentlichen die Verifikationsdaten (54) selbst charakterisiert.

13. Vorrichtung nach einem der Ansprüche 2 bis 12, **dadurch gekennzeichnet, dass** die Datentelegramme (20, 22, 24) einen Protokollteil (46) und einen Nutzdatenteil (52) beinhalten, wobei der Protokollteil (46) in Abhängigkeit von dem Kommunikationsnetzwerk (18) spezifiziert ist, und wobei die Verifikationsdaten (54) im Nutzdatenteil (52) angeordnet sind.

14. Vorrichtung nach einem der Ansprüche 2 bis 13, **dadurch gekennzeichnet, dass** das Anwenderprogramm (68, 70) einen variablen ersten Programmteil (68) und einen invarianten zweiten Programmteil (70) aufweist, wobei der erste Programmteil (68) die Steuerbefehl in Abhängigkeit von den Eingangsdaten bestimmt, und wobei der zweite Programmteil (70) die Verifikationsdaten (54) in die Datentelegramme (20, 22) integriert.

15. Verfahren zum Steuern einer automatisierten Anlage, insbesondere einer Eisenbahnanlage, die Sensoren (40) und Aktoren (38) aufweist, mit den Schritten
- Bereitstellen einer lokalen E/A-Einheit (14), an die eine Anzahl der Sensoren (40) und Aktoren (38) angeschlossen werden,
- Bereitstellen einer lokalen Abschalteinheit (32) im Bereich der E/A-Einheit (14) und Koppeln der lokalen Abschalteinheit (32) mit der lokalen E/A-Einheit (14),
- Bereitstellen einer Steuereinheit (12) zum Verarbeiten von Eingangsdaten der Sensoren (40) und zum Erzeugen von Steuerbefehlen für die Aktoren (38),
- Austauschen von Datentelegrammen (20, 22, 24) zwischen der Steuereinheit (12) und der E/A-Einheit (14) über ein Kommunikationsnetzwerk (18), das die Steuereinheit (12) und die lokale E/A-Einheit (14) verbindet,
wobei die Datentelegramme (20, 22, 24) die Eingangsdaten und/oder Steuerbefehle beinhalten, wobei die Steuereinheit (12) die Aktoren (38) in Abhängigkeit von den Eingangsdaten der Sensoren (40) mit Hilfe der Steuerbefehle ansteuert,
wobei die Steuereinheit (12) Verifikationsdaten (54) in die Datentelegramme (20, 22) für die E/A-Einheit (14) integriert, und wobei die Abschalteinheit (32) die E/A-Einheit (14) in Abhängigkeit von den Verifikationsdaten (54) deaktiviert,
**dadurch gekennzeichnet, dass** die lokale Abschalteinheit (32) in die Verarbeitung und Übertragung der Eingangsdaten und Steuerbefehle nicht eingebunden ist, so dass die Funktionen von der Abschalteinheit (32) und von der E/A-Einheit (14) getrennt und unabhängig voneinander sind.

## Claims

1. A disconnection unit for use in an arrangement for controlling an automated system, in particular a railroad system, the arrangement comprising a programmable control unit (12) for executing a user program (68, 70) and a remote I/O unit (14) to which a number of sensors (40) and actuators (38) are connected, and with the control unit (12) and the I/O unit (14) being designed to interchange data messages (20, 22, 24) via the communication network (18) in order to transmit input data and control commands,
with the disconnection unit comprising:
a data interface (82) for connection to the remote I/O unit (14),
a data processing part (74) for processing verification data (54) which the control unit (12) integrates into the data messages (20, 22) for the I/O unit (14) and which can be supplied via the data interface (30), and
a disconnection part (84, 86) designed to deactivate the I/O unit (14) depending on the verification data (54),
and wherein the disconnection unit is not included in the processing and transmission of the input data and control commands such that the functions of the disconnection unit (32) and I/O unit (14) are separated and independent of one another.

2. An arrangement for controlling an automated system which has sensors (40) and actuators (38), in particular a railroad system, the arrangement comprising a programmable control unit (12) for executing a user program (68, 70), comprising a remote I/O unit (14) to which a number of the sensors (40) and actuators (38) are connected, comprising a remote disconnection unit (32) which is coupled to the remote I/O unit (14), and comprising a communication network (18) which connects the control unit (12) and the remote I/O unit (14), with the control unit (12) being designed to process input data from the sensors (40) using the user program (68, 70) in order to generate control commands for the actuators (38), with the control unit (12) and the I/O unit (14) being designed to interchange data messages (20, 22, 24) via the communication network (18) in order to transmit the input data and the control commands, with the control unit (12) being designed to integrate verification data (54) into the data messages (20, 22) for the I/O unit (14), and with the disconnection unit (32) being designed to deactivate the I/O unit (14) depending on the specific verification data (54), **characterized in that** the remote disconnection unit (32) is designed in accordance with claim 1.

3. The arrangement of claim 2, **characterized in that** the I/O unit (14) is designed to acknowledge every data message (20, 22) which is received from the control unit (12) and which comprises a control command for the I/O unit (14), by means of a response message (24) which signals successful execution of the control command.

4. The arrangement of claim 2 or 3, **characterized in that** the I/O unit (14) has a network interface (92) for connection to the communication network (18) and a local data interface (30), to which the disconnection unit (32) is connected in order to receive the verification data (54).

5. The arrangement of claim 4, **characterized in that** the local data interface (30) is a standard serial interface.

6. The arrangement of claim 4 or 5, **characterized in that** the I/O unit (14) has a number of terminals (36) for connection of the actuators (38), with the disconnection unit (32) being designed to deactivate the terminals (36) depending on the verification data (54).

7. The arrangement of one of claims 2 to 6, **characterized in that** the disconnection unit (32) is arranged separately from the I/O unit (14).

8. The arrangement of one of claims 2 to 7, **characterized in that** the disconnection unit (32) has a multiple channel design in order to redundantly process the verification data (54).

9. The arrangement of one of claims 2 to 8, **characterized in that** the verification data (54) comprise an address (V1) that uniquely identifies the disconnection unit (32).

10. The arrangement of one of claims 2 to 9, **characterized in that** the control unit (12) is designed to transmit a plurality of data messages (20, 22) to the I/O unit (14) at defined time intervals (42), with the disconnection unit (32) being designed to monitor the time intervals (42) and to deactivate the I/O unit (40) as a function thereof.

11. The arrangement of one of claims 2 to 10, **characterized in that** the verification data (54) comprise a serial number (V3) that represents a predefined sequence of the data messages (20, 22).

12. The arrangement of one of claims 2 to 11, **characterized in that** the verification data (54) comprise a checksum (V4), which essentially represents the verification data (54) alone.

13. The arrangement of one of claims 2 to 12, **characterized in that** the data messages (20, 22, 24) comprise a protocol part (46) and a payload data part (52), with the protocol part (46) being specified depending on the communication network (18) and with the verification data (54) being arranged in the payload data part (52).

14. The arrangement of one of claims 2 to 13, **characterized in that** the user program (68, 70) has a variable first program part (68) and an invariant second program part (70), with the first program part (68) determining the control commands depending on the input data, and with the second program part (70) integrating the verification data (54) into the data messages (20, 22).

15. A method for controlling an automated system, which has sensors (40) and actuators (38), in particular a railroad system, the method comprising the steps of
- providing a remote I/O unit (14), to which a number of the sensors (40) and actuators (38) are connected,
- providing a remote disconnection unit (32) in an area of the I/O unit (14) and coupling the remote disconnection unit (32) to the remote I/O unit (14),
- providing a control unit (12) for processing input data from the sensors (40) and for generating control commands for the actuators (38),
- interchanging data messages (20, 22, 24) between the control unit (12) and the I/O unit (14) via a communication network (18), which connects the control unit (12) and the remote I/O unit (14),
wherein the data messages (20, 22, 24) comprise the input data and/or the control commands, and wherein the control unit (12) controls the actuators (38) depending on the input data from the sensors (40) by means of the control commands,
wherein the control unit (12) integrates verification data (54) into the data messages (20, 22) for the I/O unit (14), and wherein the disconnection unit (32) deactivates the I/O unit (14) depending on the verification data (54),
**characterized in that** the remote disconnection unit (32) is not included in the processing and transmission of the input data and control commands such that the functions of the disconnection unit (32) and I/O unit (14) are separated and independent of one another.

## Revendications

1. Unité de mise hors circuit destinée à être utilisée dans un dispositif de commande d'une installation automatisée, notamment d'une installation ferroviaire, l'installation possédant une unité de commande (12) programmable destinée à exécuter un programme d'utilisateur (68, 70) et une unité d'E/S (14) locale, à laquelle sont raccordés un certain nombre de capteurs (40) et d'actionneurs (38), et l'unité de commande (12) et l'unité d'E/S (14) étant configurées pour échanger des télégrammes de données (20, 22, 24) par le biais du réseau de communication (18) afin de transmettre des données d'entrée et des instructions de commande,
l'unité de mise hors circuit comprenant :
une interface de données (82) destinée à être raccordée à l'unité d'E/S (14) locale,
une unité de traitement de données (74) destinée à traiter des données de vérification (54) que l'unité de commande (12) intègre dans les télégrammes de données (20, 22) pour l'unité d'E/S (14) et qui peuvent être acheminées par le biais de l'interface de données (30), et
une partie de mise hors circuit (84, 86) qui est configurée pour désactiver l'unité d'E/S (14) en fonction des données de vérification (54),
et
l'unité de mise hors circuit n'étant pas intégrée dans le traitement et la transmission des données d'entrée et des instructions de commande, de sorte que les fonctions de l'unité de mise hors circuit (32) et de l'unité d'E/S (14) sont séparées et indépendantes les unes des autres.

2. Dispositif de commande d'une installation automatisée, notamment d'une installation ferroviaire, qui possède des capteurs (40) et des actionneurs (38), comprenant une unité de commande (12) programmable destinée à exécuter un programme d'utilisateur (68, 70), comprenant une unité d'E/S (14) locale à laquelle sont raccordés un certain nombre de capteurs (40) et d'actionneurs (38), comprenant une unité de mise hors circuit locale (32) qui est connectée à l'unité d'E/S (14) locale, et comprenant un réseau de communication (18) qui relie l'unité de commande (12) et l'unité d'E/S (14) locale, l'unité de commande (12) étant configurée pour traiter des données d'entrée des capteurs (40) en fonction du programme d'utilisateur (68, 70) afin de générer des instructions de commande pour les actionneurs (38), l'unité de commande (12) et l'unité d'E/S (14) étant configurées pour échanger des télégrammes de données (20, 22, 24) par le biais du réseau de communication (18) afin de transmettre les données d'entrée et les instructions de commande, l'unité de commande (12) étant configurée pour intégrer des données de vérification (54) dans les télégrammes de données (20, 22) pour l'unité d'E/S (14), et l'unité de mise hors circuit (32) étant configurée pour désactiver l'unité d'E/S (14) en fonction des données de vérification (54), **caractérisé en ce que** l'unité de mise hors circuit (32) locale est configurée selon la revendication 1.

3. Dispositif selon la revendication 2, **caractérisé en ce que** l'unité d'E/S (14) est configurée pour acquitter chaque télégramme de données (20, 22) reçu par l'unité de commande (12) qui contient une instruction de commande pour l'unité d'E/S (14) par un télégramme de réponse (24) qui signale l'exécution effective de l'instruction de commande.

4. Dispositif selon la revendication 2 ou 3, **caractérisé en ce que** l'unité d'E/S (14) possède une interface de réseau (92) servant au raccordement au réseau de communication (18) et une interface de données locale (30) à laquelle est raccordée l'unité de mise hors circuit (32) afin de recevoir les données de vérification (54).

5. Dispositif selon la revendication 4, **caractérisé en ce que** l'interface de données locale (30) est une interface normalisée série.

6. Dispositif selon la revendication 4 ou 5, **caractérisé en ce que** l'unité d'E/S (14) possède un certain nombre de bornes (36) servant au raccordement des actionneurs (38), l'unité de mise hors circuit (32) étant configurée pour désactiver les bornes (36) en fonction des données de vérification (54).

7. Dispositif selon l'une des revendications 2 à 6, **caractérisé en ce que** l'unité de mise hors circuit (32) est disposée séparément de l'unité d'E/S (14).

8. Dispositif selon l'une des revendications 2 à 7, **caractérisé en ce que** l'unité de mise hors circuit (32) est constituée avec plusieurs canaux afin de traiter les données de vérification (54) de manière redondante.

9. Dispositif selon l'une des revendications 2 à 8, **caractérisé en ce que** les données de vérification (54) contiennent une adresse (V1) qui identifie l'unité de mise hors circuit (32) de manière univoque.

10. Dispositif selon l'une des revendications 2 à 9, **caractérisé en ce que** l'unité de commande (12) est configurée pour envoyer une pluralité de télégrammes de données (20, 22) à des intervalles de temps (42) définis à l'unité d'E/S (14), l'unité de mise hors circuit (32) étant configurée pour surveiller les intervalles de temps (42) et pour désactiver l'unité d'E/S (14) en fonction de ceux-ci.

11. Dispositif selon l'une des revendications 2 à 10, **caractérisé en ce que** les données de vérification (54) contiennent un numéro courant (V3) qui représente une séquence des télégrammes de données (20, 22).

12. Dispositif selon l'une des revendications 2 à 11, **caractérisé en ce que** les données de vérification (54) contiennent une somme de contrôle (V4) qui caractérise sensiblement les données de vérification (54) elles-mêmes.

13. Dispositif selon l'une des revendications 2 à 12, **caractérisé en ce que** les télégrammes de données (20, 22, 24) contiennent une partie de protocole (46) et une partie de données utiles (52), la partie de protocole (46) étant spécifiée en fonction du réseau de communication (18) et les données de vérification (54) étant disposées dans la partie de données utiles (52).

14. Dispositif selon l'une des revendications 2 à 13, **caractérisé en ce que** le programme d'utilisateur (68, 70) possède une première partie de programme (68) variable et une deuxième partie de programme (70) invariante, la première partie de programme (68) déterminant les instructions de commande en fonction des données d'entrée et la deuxième partie de programme (70) intégrant les données de vérification (54) dans les télégrammes de données (20, 22).

15. Procédé de commande d'une installation automatisée, notamment d'une installation ferroviaire, qui possède des capteurs (40) et des actionneurs (38), comprenant les étapes suivantes
- fourniture d'une unité d'E/S (14) locale à laquelle sont raccordés un certain nombre de capteurs (40) et d'actionneurs (38),
- fourniture d'une unité de mise hors circuit locale (32) dans la zone de l'unité d'E/S (14) et connexion de l'unité de mise hors circuit locale (32) à l'unité d'E/S (14) locale,
- fourniture d'une unité de commande (12) pour traiter des données d'entrée des capteurs (40) et pour générer des instructions de commande pour les actionneurs (38),
- échange de télégrammes de données (20, 22, 24) entre l'unité de commande (12) et l'unité d'E/S (14) par le biais d'un réseau de communication (18) qui relie l'unité de commande (12) et l'unité d'E/S (14) locale,
les télégrammes de données (20, 22, 24) contenant les données d'entrée et/ou les instructions de commande, l'unité de commande (12) commandant les actionneurs (38) à l'aide des instructions de commande en fonction des données d'entrée des capteurs (40), l'unité de commande (12) intégrant des données de vérification (54) dans les télégrammes de données (20, 22) pour l'unité d'E/S (14), et l'unité de mise hors circuit (32) désactivant l'unité d'E/S (14) en fonction des données de vérification (54), **caractérisé en ce que** l'unité de mise hors circuit (32) locale n'est pas intégrée dans le traitement et la transmission des données d'entrée et des instructions de commande, de sorte que les fonctions de l'unité de mise hors circuit (32) et de l'unité d'E/S (14) sont séparées et indépendantes les unes des autres.
